# EUROPÄISCHE PATENTSCHRIFT

(11) **EP 3 031 637 B1**
(45) Veröffentlichungstag und Bekanntmachung des Hinweises auf die Patenterteilung: **13.02.2019**
(21) Anmeldenummer: 15198694.0
(22) Anmeldetag: 09.12.2015
(51) Int. Cl.: B60G 7/00, B60G 11/16

(54) **MEHRTEILIGER FEDERLENKER**
MULTI-PART SPRING LINK
BRAS DE RESSORT EN PLUSIEURS PARTIES

(30) Priorität: 12.12.2014 DE 102014118518
(43) Veröffentlichungstag der Anmeldung: 15.06.2016
(73) Patentinhaber: Benteler Automobiltechnik GmbH, 33102 Paderborn (DE)
(72) Erfinder: Meyer, Stephan, 33605 Bielefeld (DE); Mielke, Oliver, 33184 Altenbeken (DE)
(74) Vertreter: Patentship Patentanwaltsgesellschaft mbH

(56) Entgegenhaltungen:
- WO-A1-2006/046876
- DE-A1-102004 008 957
- DE-B3-102008 059 916
- KR-A- 20100 137 958
- US-A- 2 017 316
- US-A- 2 344 896
- US-A- 2 707 100

## Beschreibung

Die vorliegende Erfindung betrifft einen Federlenker.

Federlenker übernehmen im Fahrzeugbau die Aufgabe, ein Rad in einer Radaufhängung in einer Richtung oder in mehrere Richtungen zu führen. Üblicherweise nimmt ein Federlenker die auf das Rad wirkenden Kräfte auf und leitet diese an eine mit dem Federlenker gekoppelte Feder sowie Hinterachsträger oder an ein Feder-Dämpfer-System weiter.

Bekannte Federlenker sind durch Federlenkschalen gebildet, welche eine Federauflage für die Aufnahme der Feder aufweisen. Die wechselnde Belastung der Dämpfkräfte kann jedoch Bereich der Federauflage zu einer unerwünschten Aufweitung einer derartigen Federlenkerschale führen. Außerdem sind Federlenkschalen in der Herstellung teuer.

In der DE102010051741 ist ein Federlenker aus einem Leichtmetallstrangpressprofil mit einem Pi-förmigem Querschnitt offenbart, welcher eine höhere Steifigkeit im Vergleich mit herkömmlichen Federlenkern, welche durch Federlenkschalen gebildet sind, aufweist. Das Leichtmetallstrangpressprofil kann zudem kostengünstig durch Biegen, Schneiden, Stanzen oder Spreizen zu einem Endbauteil kostengünstig werden.

Die Patentschrift US 2,017,316 zeigt eine Radaufhängung umfassend zwei Schenkelteile, die an einem ersten Ende rahmenseitig am Fahrzeug befestigt sind und die mit einem zweiten Ende radseitig an einem Rad befestigt sind. Die US 2,017,316 offenbart einen mehrteiligen Lenker gemäß dem Oberbegriff des Anspruchs 1.

Die Offenlegungsschrift WO 2006/046876 A1 zeigt einen Federlenker, der ausgebildet ist, eine Feder zu tragen.

Die Offenlegungsschrift DE 10 2004 008 957 A1 zeigt einen Federlenker für eine Radaufhängung eines Kraftfahrzeugs.

Die Offenlegungsschrift KR 20 100 137 958 A zeigt eine Federlenkschale, die einteilig aus einem Bauteil gebildet ist.

Die Patentschrift DE 10 2008 059916 B3 zeigt einen Federlenker mit einem Schließblech.

Die Patentschrift US 2,707,100 zeigt einen Federlenker für eine Radaufhängung.

Die Patentschrift US 2,344,896 zeigt einen Federlenker für eine Radaufhängung.

Es ist die Aufgabe der vorliegenden Erfindung, ein alternatives Konzept für einen kostengünstigen Federlenker zu schaffen, bei welchem auf einen Schalenaufbau verzichtet werden kann.

Die obige Aufgabe wird durch die Merkmale des unabhängigen Anspruchs gelöst. Vorteilhafte Ausführungsformen der Erfindung sind Gegenstand der abhängigen Ansprüche, der Beschreibung und der Figuren.

Die Erfindung basiert auf der Erkenntnis, dass ein kostengünstiger Federlenker durch zwei nebeneinander angeordnete, separate Profilseitenteile gebildet werden kann, welche die beiden Seitenschenkel des Federlenkers bilden. Dadurch kann auf die Verwendung von Schalen zum Aufbau des Federlenkers verzichtet werden. Die Steifigkeit der Profilseitenteile kann durch eine Profilierung der Querschnitte der Profilseitenteile, beispielsweise durch ein Z-Profil, beeinflusst werden. Der Federaufnahmebereich für eine Feder kann kostengünstig durch eine Auswölbung oder Aufweitung der Profilseitenteile, beispielsweise durch Biegung der Profilseitenteile, gebildet sein. Darüber hinaus können Verstärkungsrippen oder Verstärkungsstege vorgesehen sein, um eine noch höhere Steifigkeit zu erreichen. Die Auswölbungen können durch Biegungen der Profilseitenteile geformt sein.

Gemäß einem Aspekt betrifft die Erfindung einen mehrteiligen Federlenker für eine Radaufhängung eines Fahrzeugs, mit einem ersten Profilseitenteil, das einen ersten Seitenschenkel des mehrteiligen Federlenkers bildet, wobei das erste Profilseitenteil eine erste Auswölbung aufweist, einem zweiten Profilseitenteil, das einen zweiten Seitenschenkel des mehrteiligen Federlenkers bildet, wobei das zweite Profilseitenteil eine zweite Auswölbung aufweist, wobei die erste Auswölbung und die zweite Auswölbung einander gegenüber angeordnet sind und gemeinsam einen Federaufnahmebereich für die Aufnahme einer Feder bilden.

Das erste Profilseitenteil und das zweite Profilseitenteil sind bevorzugt jeweils aus einem Leichtmetall wie Aluminium, z.B. 2000er, 5000er,6000er,7000er Legierung, gebildet. Das erste Profilseitenteil und das zweite Profilseitenteil sind jeweils Strangpressprofile. Dadurch können die Profilseitenteile kostengünstig hergestellt werden.

Das erste Profilseitenteil und das zweite Profilseitenteil sind bevorzugt identisch, jedoch spiegelverkehrt geformt, und bildet dadurch einen ersten, linken Seitenschenkel und einen zweiten, rechten, Seitenschenkel.

Gemäß einer Ausführungsform bilden die Profilseitenteile ausschließlich die Seitenschenkel des Federlenkers. Mit anderen Worten ausgedrückt bilden die Profilseitenteile keinen Boden, insbesondere keinen geschlossenen, Boden und keine Decke, insbesondere keine geschlossene Decke des Federlenkers. Die Profilseitenteile können über die gesamte Länge des Federlenkers voneinander beabstandet verlaufen. Die Profilseitenteile können jedoch auch durch Verbindungen, beispielsweise Clinch- oder Nietverbindungen, abschnittsweise miteinander verbunden sein.

Die Profilseitenteile an sich sind ebenfalls durch keine Schalen gebildet. Die Querschnittsprofile der Profilseitenteile sind daher nicht schalenförmig, sondern offen, beispielsweise Z-förmig oder S-förmig.

Erfindungsgemäß sind das erste Profilseitenteil und das zweite Profilseitenteile einstückige Profilseitenteile. Das erste Profilseitenteil und das zweite Profilseitenteil sind stranggepresste Profilseitenteile. Die Profilseitenteile können dadurch kostengünstig in großen Stückzahlen hergestellt werden.

Gemäß einer Ausführungsform sind das erste Profilseitenteil und das zweite Profilseitenteil zumindest abschnittsweise voneinander beabstandet und einander gegenüber angeordnet.

Gemäß einer Ausführungsform sind die Wandungen der beiden Profilseitenteile abschnittsweise zusammengeführt und verbunden.

Gemäß einer Ausführungsform sind haben das erste Profilseitenteil und das zweite Profilseitenteil jeweils einen Z-förmigen, insbesondere einen gestreckt Z-förmigen, oder einen S-förmigen, insbesondere einen gestreckt S-förmigen, Querschnitt. Dadurch wird eine hohe Steifigkeit in Querrichtung zur Längsachse des Federlenkers erreicht.

Gemäß einer Ausführungsform haben das erste Profilseitenteil und das zweite Profilseitenteil jeweils einen Außenflansch und einen Innenflansche, wobei jeweils ein Außenflansch und ein Innenflansch des jeweiligen Profilseitenteils durch eine Wandung verbunden ist, wobei die Außenflansche der Profilseitenteile einander abgewandt nach außen gerichtet sind und wobei die Innenflansche der Profilseitenteile einander zugewandt nach innen gerichtet sind. Bei einem Z-förmigen Querschnitt sind die Außenflansche durch die oberen Z-Stege der spiegelbildlich angeordneten Z-Profile gebildet. Die Innenflansche sind durch die unteren Z-Stege der spiegelbildlich angeordneten Z-Profile gebildet. Die Wandungen können bei einem gestreckten, auseinandergezogenen Z-Profil sich von dem jeweiligen Z-Steg unter einem Winkel größer 90° erstrecken.

Gemäß einer Ausführungsform unterscheiden sich die Profildicken der Außenflansche von den Profildicken der Innenflansche und/oder von den Profildicken der Wandungen. Die Außenflansche können dicker sein als die Innenflansche und als die Wandungen. Die Profil- bzw. Wanddicke der Profilseitenteile kann zwischen 2-6mm liegen. Die beiden Flansche sind bevorzugt dicker als die Dicke der jeweiligen Wandung. Auf diese Weise wird eine flexible Anpassung des Federlenkers an unterschiedliche Belastungsanforderungen bewirkt werden. Dabei kann das Grunddesign des Federlenkers gleich bleiben. Die verschiedenen Wand- bzw. Profildicken können durch Extrudieren hergestellt werden.

Gemäß einer Ausführungsform haben das erste Profilseitenteil und das zweite Profilseitenteil jeweils einen Innenflansch, wobei die Innenflansche der Profilseitenteile nach innen gerichtet und einander zugewandt sind, wobei im Federaufnahmebereich auf den Innenflanschen ein Federauflageteil zur Auflage der Feder angeordnet ist. Das Federauflageteil überbrückt einen Abstand zwischen den Innenflanschen und bildet dadurch eine Federauflage für die Feder.

Gemäß einer Ausführungsform ist das Federauflageteil durch ein Formteil, insbesondere durch ein Leichtmetallpressteil, gebildet. Dadurch kann das Federauflageteil separat und kostengünstig hergestellt werden.

Gemäß einer Ausführungsform ist das Federauflageteil durch ein Formteil, insbesondere durch ein Leichtmetallpressteil, mit einer zentralen Öffnung und einem die zentrale Öffnung umrandenden Zentriersteg zur Zentrierung der Feder gebildet.

Gemäß einer Ausführungsform ist das Federauflageteil mit dem jeweiligen Innenflansch mittels einer Kaltfügeverbindung, insbesondere einer Clinch-Verbindung und/oder Stanznietverbindung und/oder Klebeverbindung, oder mittels einer Warmfügeverbindung, insbesondere einer Schweißverbindung oder einer Reibrührschweißverbindung, verbunden.

Gemäß einer Ausführungsform haben das erste Profilseitenteil und das zweite Profilseitenteil jeweils einen Außenflansch, wobei die Außenflansche der Profilseitenteile nach außen gerichtet und einander abgewandt sind, wobei auf den Außenflanschen ein Verstärkungssteg
angeordnet ist, welcher das erste Profilseitenteil und das zweite Profilseitenteil verbindet.

Gemäß einer Ausführungsform ist der Verstärkungssteg mit dem jeweiligen Außenflansch mittels einer Kaltfügeverbindung, insbesondere einer Clinch-Verbindung und/oder eine Stanznietverbindung und/oder eine Klebeverbindung, oder mittels einer Warmfügeverbindung, insbesondere einer Reibrührschweißverbindung, verbunden.

Gemäß einer Ausführungsform ist ein Verstärkungssteg vorgesehen, welcher eine Wandung des ersten Profilseitenteils und eine Wandung des zweiten Profilseitenteils durchsetzt und das erste Profilseitenteil und das zweite Profilseitenteil verbindet.

Gemäß einer Ausführungsform ist der jeweilige Verstärkungssteg radaufhängungsseitig, unmittelbar vor oder nach dem Federaufnahmebereich oder fahrzeugaufbauseitig angeordnet.

Gemäß einer Ausführungsform erstrecken sich die erste Auswölbung und die zweite Auswölbung quer zu einer Erstreckungsrichtung oder zu einer Längsachse des mehrteiligen Federlenkers oder des jeweiligen Profilseitenteils. Die Auswölbungen wölben die Profilseitenteile nach außen, also voneinander wegweisend und bilden dadurch gemeinsam einen tonnenförmigen Federaufnahmebereich.

Gemäß einer Ausführungsform sind die erste Auswölbung und die zweite Auswölbung U-förmig oder zumindest abschnittsweise kreisbogenförmig gebildet. Auf diese Weise entsteht ein zumindest teilweise kreisrunder, tonnenförmiger Federaufnahmebereich für die Aufnahme der Feder.

Gemäß einer Ausführungsform hat der mehrteilige Federlenker ein erstes Lagerende zur radseitigen Lagerung und ein zweites Lagerende zur fahrzeugaufbauseitigen Lagerung, wobei das erste Profilseitenteil und das zweite Profilseitenteil an dem ersten Lagerende fluchtend gegenüberliegende Lageröffnungen, insbesondere Stanzlöcher, zur Dämpfer-Anbindung aufweisen, und/oder wobei in dem ersten Profilseitenteil und in dem zweiten Profilseitenteil an dem zweiten Lagerende fluchtend gegenüberliegende Lageröffnungen zur gemeinsamen Aufnahme eines Elastomerlagers gebildet sind.

Gemäß einem weiteren Aspekt betrifft die Erfindung ein Verfahren zum Herstellen eines mehrteiligen Federlenkers, beispielsweise des mehrteiligen Federlenkers gemäß dem erstgenannten Aspekt, mit: Extrudieren von zwei Leichtmetallstrangprofilen, und Biegen, insbesondere Pressbiegen, der Leichtmetallstrangprofile in einem mittleren Bereich der Leichtmetallstrangprofile, um jeweils ein Profilseitenteil mit einer Auswölbung zu erhalten, wobei gegenüber liegende Auswölbungen von Profilseitenteilen einen Federaufnahmebereich für die Aufnahme einer Feder bilden. Das erste Profilseitenteil und das zweite Profilseitenteil sind einstückige Profilseitenteile. Das erste Profilseitenteil und das zweite Profilseitenteil sind stranggepresste Profilseitenteile.

Der Grundkörper des Federlenkers kann somit aus zwei Leichtmetallstrangpressprofilen gebildet sein. Die Profilseitenteile sind beispielsweise mit ähnlichem Z-förmigem Querschnitt extrudiert. Das extrudierte Halbzeug wird dann zur Biegung in eine Presse gelegt. In dem mittleren Bereich, wo eine Federauflage angeordnet sein soll, wird jeweils ein Bogen geformt, um die Auswölbungen zu erhalten An der jeweiligen Seitenwand können dann die Befestigungslöcher für Lagersitze gestanzt werden.

Gemäß einer Ausführungsform umfasst das Verfahren das Pressen eines Leichtmetallteils, um ein Federauflageteil zu erhalten, und das stoffschlüssige Befestigen des Federauflageteils mit den Profilseitenteilen, insbesondere auf einander zugewandten Innenflanschen der Profilseitenteile, in dem Federaufnahmebereich.

Durch den Grundkörper aus zwei separaten Strangpressprofilen und Federauflage wird ein hoher Materialnutzungsgrad erreicht. Im Vergleich zum herkömmlichen Schalenprofil wird, insbesondere bei einem Z-Profil, wenig Material weggestanzt.

Weitere Ausführungsbeispiele werden Bezug nehmend auf die beiliegenden Figuren beschrieben. Es zeigen:
- Fig. 1A und 1B: Darstellungen eines mehrteiligen Federlenkers 100;
- Fig. 2A und 2B: Darstellungen des mehrteiligen Federlenkers 100;
- Fig. 3: Darstellung des mehrteiligen Federlenkers 100;
- Fig. 4: Darstellung des mehrteiligen Federlenkers 100;
- Fig. 5A, 5B und 5C: Darstellungen eines mehrteiligen Federlenkers 100;
- Fig. 6A, 6B und 6C: Darstellungen eines mehrteiligen Federlenkers 100; und
- Fig. 7: Ablaufdiagramm eines Verfahrens zur Herstellung eines mehrteiligen Federlenkers.

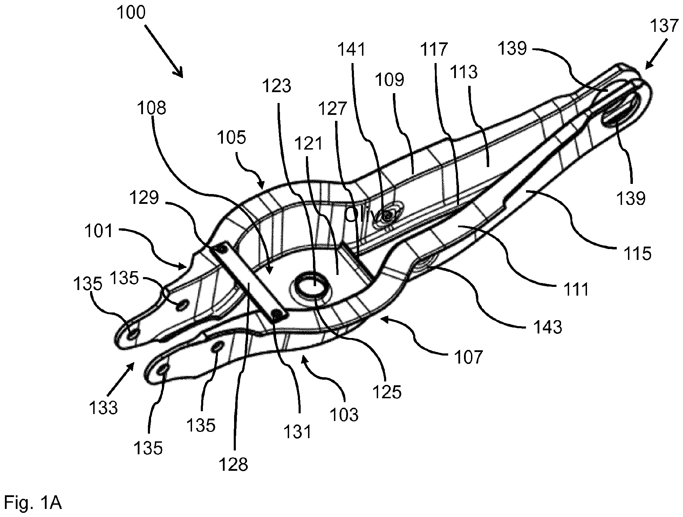

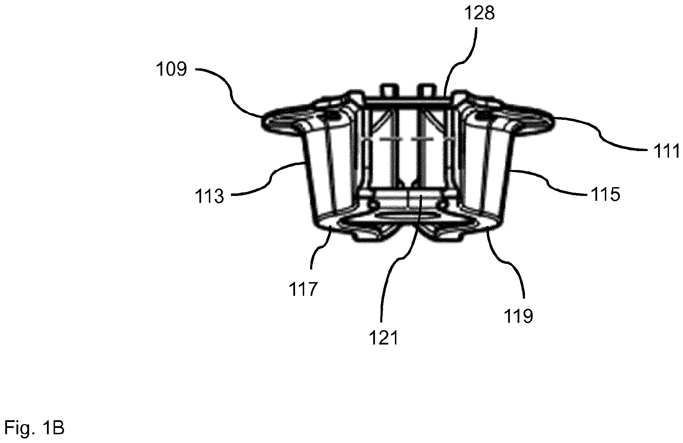

Fig. 1A und 1B zeigen Darstellungen eines mehrteiligen Federlenkers 100 für die Radaufhängung eines Fahrzeugs, mit einem ersten Profilseitenteil 101, das einen ersten Seitenschenkel des mehrteiligen Federlenkers 100 bildet, und mit einem zweiten Profilseitenteil 103, das einen zweiten Seitenschenkel des mehrteiligen Federlenkers 100 bildet.

Die Profilseitenteile 101 und 103 bilden einen Grundkörper des Federlenkers 100.

Das erste Profilseitenteil 101 hat eine erste Auswölbung 105, welche beispielsweise durch eine Biegung des ersten Profilseitenteils 101 geformt ist. Entsprechend umfasst das zweite Profilseitenteil 103 eine zweite Auswölbung 107, welche ebenfalls durch eine Biegung des zweiten Profilseitenteils 103 geformt ist. Die Auswölbungen 105 und 107 sind einander gegenüber angeordnet und bilden gemeinsam einen Federaufnahmebereich 108 für die Aufnahme einer in Fig. 1 nicht dargestellten Feder.

Das erste Profilseitenteil 101 und das zweite Profilseitenteil 103 sind einander gegenüber angeordnet und weisen jeweils beispielsweise ein gestrecktes Z-Querschnittsprofil auf. Die oberen Stege der gespiegelt angeordneten Z-Querschnittsprofile bilden jeweils einen Außenflansch 109 des ersten Profilseitenteils 101 und einen Außenflansch 111 des zweiten Profilseitenteils 103. Die Außenflasche 109 und 111 sind einander abgewandt und nach außen gerichtet.

Die Außenflansche 109 und 111 sind jeweils durch eine Wandung 113, 115, mit einem unteren Z-Steg verbunden, welcher bei dem ersten Profilseitenteil 101 einen ersten Innenflansch 117 bildet und bei dem zweiten Profilseitenteil 103 einen zweiten Innenflansch 119 bildet. Die Innenflansche 117 und 119 sind nach innen gerichtet und einander zugewandt.

Die Innenflansche 117 und 119 sind bevorzugt in derselben Ebene angeordnet und bilden Stützen für die Aufnahme eines Federauflageteils 121.

Das Federauflageteil 121 ist beispielsweise ein Formpressteil aus einem Leichtmetall wie Aluminium gefertigt.

Gemäß einer Ausführungsform umfasst das Federauflageteil 121 eine zentrale Öffnung 123, welche durch einen Zentriersteg 125 umrandet ist. Der Zentriersteg 125 ist für eine Zentrierung einer durch das Federauflageteil 121 zu stützenden Feder vorgesehen. Das Federauflageteil 121 kann ferner zumindest einen randseitigen Begrenzungssteg 127 aufweisen, welcher beispielsweise durch eine Biegung des Federauflageteils 121 geformt ist. Der Begrenzungssteg 127 kann ein Verrutschen der Feder verhindern.

Das Federauflageteil 121 liegt auf den Innenflanschen 117 und 119 auf und ist mit diesen beispielsweise stoffschlüssig verbunden.

Der Federlenker 100 kann ferner einen Verstärkungssteg 128 aufweisen, welcher das erste Profilseitenteil 101 und das zweite Profilseitenteil 103 verbindet. Der Verstärkungssteg 128 liegt beispielsweise auf den Außenflanschen 109, 111 beispielsweise unmittelbar vor dem Federaufnahmebereich 108 auf. Der Verstärkungssteg 128 kann zusätzlich einer Aufweitung des Federlenkers 100 in dem Federaufnahmebereich 108 entgegenwirken, wodurch eine noch höhere Steiffestigkeit des Federlenkers 100 erreicht wird.

Der Verstärkungssteg 127 kann mit den Außenflanschen 109, 111 beispielsweise durch Verbindungen 129, 131 verbunden sein. Die Verbindungen 129, 131 können Kaltfügeverbindungen wie Clinch-Verbindungen, Stanznietverbindungen, Klebverbindungen oder Mischformen dieser Verbindungen, beispielsweise Clinch- und Klebeverbindung, sein. Ein Vorteil von Kaltfügeverfahren besteht darin, dass das Material keiner Wärmeeinwirkung ausgesetzt wird, wodurch wärmebedingte Materialkorrosionen gänzlich vermieden werden können und wodurch auf eine zusätzliche Oberflächenschutzlackierung verzichtet werden kann.

Die Verbindungen 129, 131 können jedoch auch Warmfügeverbindungen wie Reibrührschweißverbindungen sein. Reibrührschweißen wird unter einer Schmelztemperatur des Materials durchgeführt und hat den Vorteil einer geringen Wärmeeinflusszone. Auf diese Weise können nachteilige Gefügeänderungen beim Erstarren der Schmelze vermieden werden.

Der Federlenker 100 kann mit seinem ersten Lagerende 133 radseitig befestigt oder befestigbar sein. Hierzu können in den Profilseitenteilen 101, 103 Lageröffnungen 135, beispielsweise Stanzlöcher, zur Dämpfer-Anbindung gebildet sein.

Der Federlenker 100 hat ferner ein zweites Lagerende 137, das zur fahraufbauseitigen Befestigung des Federlenkers, beispielsweise an einem Fahrzeugrahmen, dient. Hierzu sind in den Profilseitenteilen 101, 103 Lageröffnungen 139 gebildet, welche für die gemeinsame Aufnahme eines Elastomerlagers, beispielsweise eines Gummilagers, dienen.

Die Profilseitenteile 101 und 103 können ferner Stabilisatoranbindungen 141 und 143 aufweisen.

Die Anbindung mit einem Dämpfer und/oder einem Stabilisator ermöglicht es, den Grundkörper aus den beiden Profilseitenteilen, beispielsweise Strangpressprofilen, gegen die Profilaufweitung weiter zu stabilisieren.

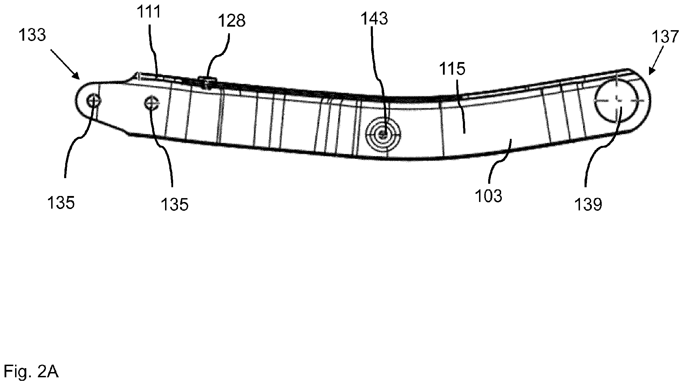

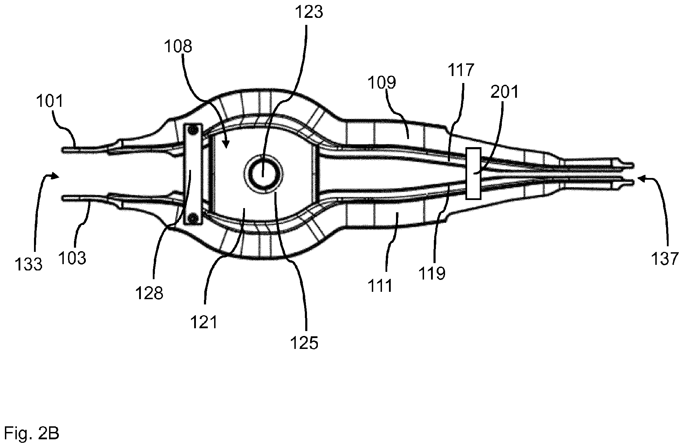

In den Fig. 2A und 2B sind weitere Darstellungen des Federlenkers 100 gezeigt.

Wie in Fig. 2A dargestellt kann der Federlenker 100 in Längsrichtung gebogen sein. Diese Längsbiegung kann durch eine Formung der Profilseitenteile 101 und 103 bewirkt werden. Fig. 2B zeigt eine weitere Darstellung des Federlenkers 100. Wie in 2B dargestellt können die Profilseitenteile 101 und 103 in Richtung des zweiten Lagerendes 137 aufeinander zulaufen. Durch die Zusammenführung der Profilseitenteile 101 und 103 sind die Lageröffnungen 139 nah beieinander und bilden gemeinsam eine Lageraufnahme für ein in Fig. 2B nicht dargestelltes Elastomerlager.

Der Federlenker weist optional einen weiteren Verstärkungssteg 201 auf, welcher von dem ersten Lagerende 133 aus betrachtet hinter dem Federaufnahmebereich 108 liegt.

Der weitere Verstärkungssteg 201 liegt auf den Außenflanschen 109, 111 auf und verbindet die Profilseitenteile 101 und 103. Dadurch können eine noch höhere Steifigkeit des Federlenkers 100 sowie eine höhere Stabilität des Fahrverhaltens erreicht werden. Der weitere Verstärkungssteg 201 kann mittels eines Kaltfügeverfahrens oder eines Warmfügeverfahrens, wie es im Zusammenhang mit dem Verstärkungssteg 128 ausgeführt wurde, mit den Außenflanschen 109, 111 verbunden sein.

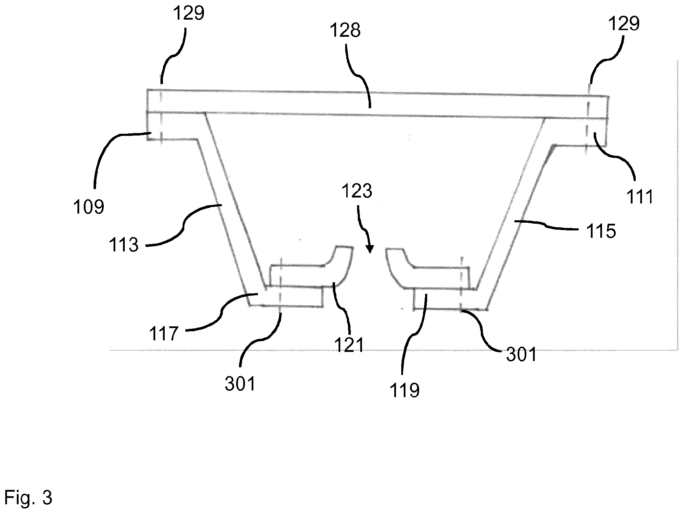

Fig. 3 zeigt eine schematische Darstellung des Federlenkers 100, in welcher eine Verbindung 129 des Verstärkungsstegs 128 mit den Außenflanschen 109, 111 und eine Verbindung 301 des Federauflageteils 121 mit den Innenflanschen 113, 121 dargestellt ist. Die Verbindungen 129 und 301 können Kaltfügeverbindungen oder Warmfügeverbindungen sein, wie sie im Zusammenhang mit dem Verstärkungssteg 128 beschrieben wurden.

Das Federauflageteil 121 kann mit den Innenflanschen 113, 121 mittels eines Kaltfügeverfahrens oder eines Warmfügeverfahrens verbunden sein, wie es im Zusammenhang mit der Verbindung des Verstärkungsstegs 128 ausgeführt wurde.

Die Außenflanschen 109 und 111 haben eine Profildicke von beispielsweise 6 mm. Die Wandungen 113 und 115 haben eine Profildicke von beispielsweise 3 mm. Die Innenflanschen 117, 119 haben eine Profildicke von beispielsweise 5 mm.

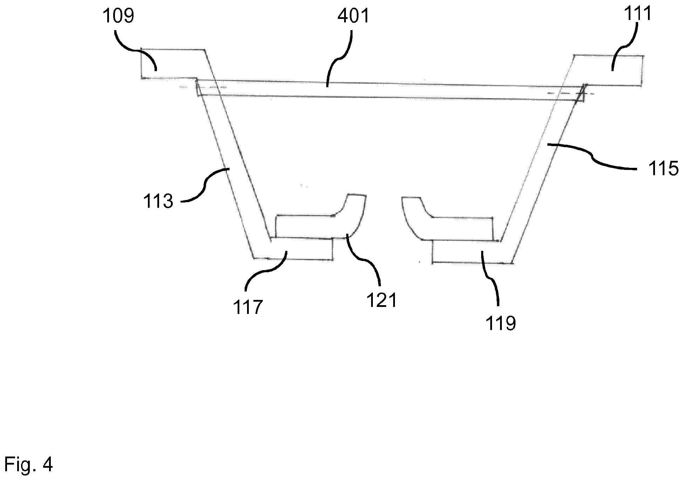

Gemäß einer Ausführungsform kann das Federauflageteil 121 höher als es in Fig. 4 dargestellt ist befestigt bzw. angeordnet werden. Hierzu können die Innenflansche 117, 119 beispielsweise in vertikaler Richtung versetzt und somit höher an den Wandungen 113 und 115 gebildet oder angebracht sein. Die Innenflansche 117 und 119 können jedoch auch durch eine Ver- oder Umformung der Profilseitenteile 101, 103, insbesondere der Wandungen 113, 115, in vertikaler Richtung nach oben versetzt werden. Darüber hinaus kann ein Zwischenboden vorgesehen sein, welcher auf den Innenflanschen 117 und 119 befestigt werden kann.

In Fig. 4 ist eine weitere schematische Darstellung des Federlenkers 100 mit einem weiteren Verstärkungssteg 401 gezeigt, welcher die Wandungen 113, 115 unterhalb der Außenflansche 109, 111 durchsetzt. Hierzu können die Wandungen 113, 115 Stanzöffnungen aufweisen, in welche der weitere Verstärkungssteg 401 einführbar ist. Der weitere Verstärkungssteg 401 kann mit den Wandungen 113, 115 mittels desselben Verbindungsverfahrens wie der Verbindungssteg 128 verbunden sein. Auf diese Weise kann eine noch höhere Stabilität des Federlenkers 100 erreicht werden.

Der weitere Verstärkungssteg 401 kann zusätzlich oder alternativ zu einem der Verstärkungsstege 128, 201 oder zu den beiden Verstärkungsstegen 128, 201 vorgesehen sein.

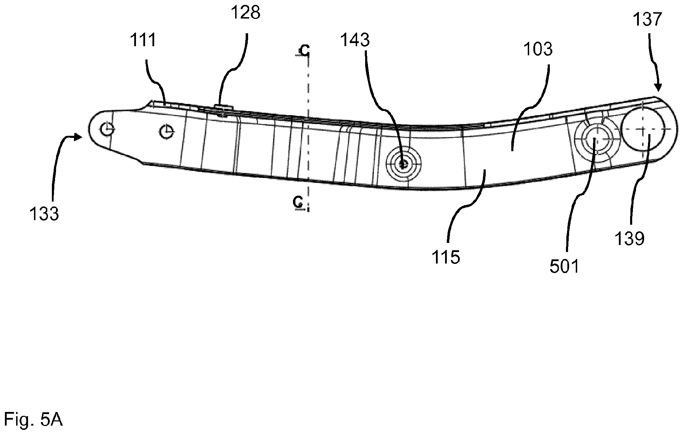

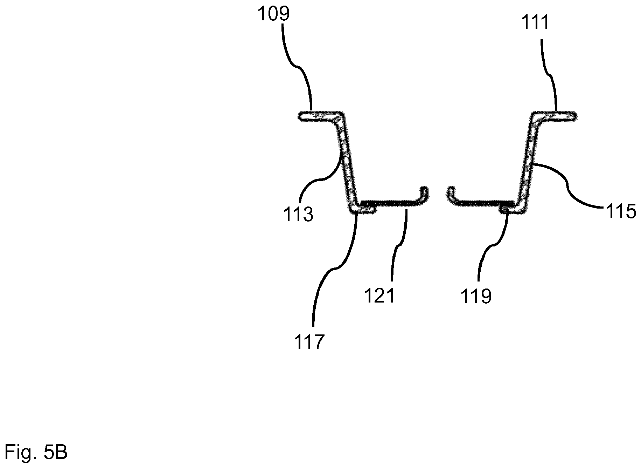

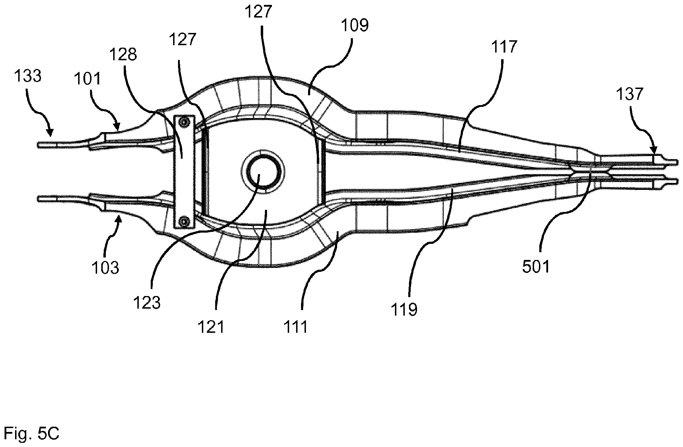

Fig. 5A, Fig. 5B und Fig. 5C zeigen weitere Darstellungen des Federlenkers 100. Im Unterschied zu den in den Fig. 1A und Fig. 1B gezeigten Darstellungen sind die Profilseitenteile 101 und 103 im Bereich des zweiten Lagerendes 137 miteinander durch eine Verbindung 501 verbunden. Dadurch werden die Profilseitenteile 101 und 103 lagerendseitig zusammengehalten, um eine höhere Stabilität der Lagerung eines Elastomerlagers in den Lageröffnungen sowie ein verbessertes Fahrverhalten des Federlenkers 139 zu erreichen. Die Verbindung 501 kann eine Clinch-Verbindung oder eine Stanznietverbindung sein.

Die Verbindung 501 kann als eine Alternative zu dem Verstärkungssteg 128, 201, 401 vorgesehen sein. Gemäß einer Ausführungsform kann die Verbindung 501 mit zumindest einem der Verstärkungsstege 128, 201, 401 kombiniert werden.

In Fig. 5B ist ein Querschnitt des Federlenkers 100 entlang der Schnittachse C-C dargestellt.

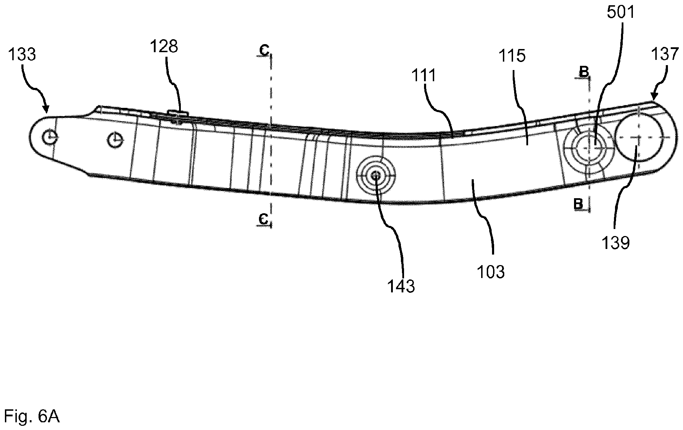

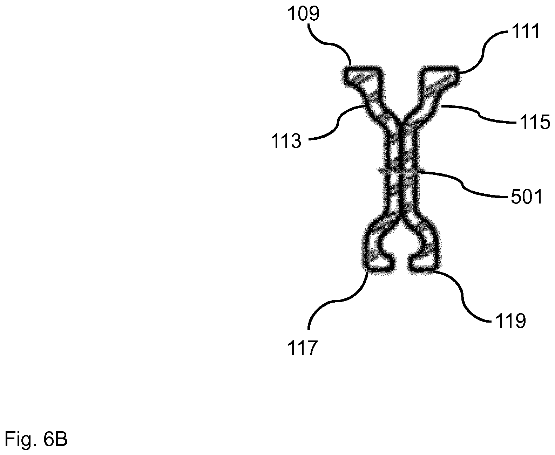

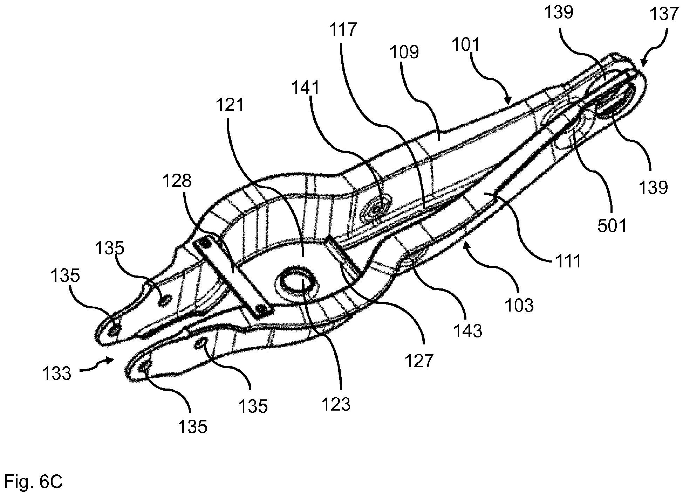

Fig. 6A, Fig. 6B und Fig. 6C zeigen weitere Darstellungen des in den Fig. 5A, 5B und 5C dargestellten Federlenkers 100. In Fig. 6B ist ein Querschnitt des Federlenkers 100 entlang der Schnittachse D-D dargestellt. In dieser Darstellung ist die Zusammenführung der Profilseitenteile 101 und 103 im Bereich der Verbindung 501 gesondert dargestellt. Durch die Verbindung 501 werden die Wandungen 113, 115 der Profilseitenteile 101 und 103 abschnittsweise zusammengeführt, sodass der Federlenker 100 im Bereich der Verbindung 501 ein X-förmiges Profil aufweist.

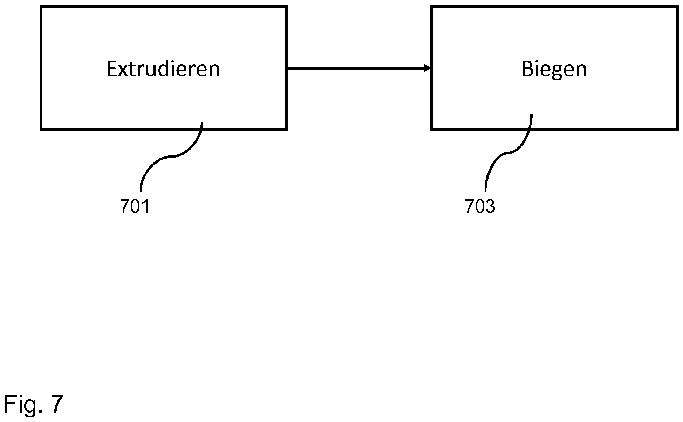

Fig. 7 zeigt ein schematisches Diagramm eines Verfahrens zum Herstellen eines mehrteiligen Federlenkers, beispielsweise des Federlenkers 100, mit: Extrudieren 701 von zwei Leichtmetallstrangprofilen, und Biegen 703, insbesondere Pressbiegen, der Leichtmetallstrangprofile in einem mittleren Bereich der Leichtmetallstrangprofile, um jeweils ein Profilseitenteil mit einer Auswölbung zu erhalten, wobei gegenüber liegende Auswölbungen von Profilseitenteilen einen Federaufnahmebereich für die Aufnahme einer Feder bilden.

### Bezugszeichenliste

- 100: Federlenker
- 101: Profilseitenteil
- 103: Profilseitenteil
- 105: Auswölbung
- 107: Auswölbung
- 108: Federaufnahmebereich
- 109: Außenflansch
- 111: Außenflansch
- 113: Wandung
- 115: Wandung
- 117: Innenflansch
- 119: Innenflansch
- 121: Federauflageteil
- 123: Öffnung
- 125: Zentriersteg
- 127: Begrenzungssteg
- 128: Verstärkungssteg
- 129: Verbindung
- 131: Verbindung
- 133: erstes Lagerende
- 135: Lageröffnungen
- 137: zweites Lagerende
- 139: Lageröffnungen
- 141: Stabilisatoranbindung
- 143: Stabilisatoranbindung

- 201: Verstärkungssteg

- 301: Verbindungen

- 401: Verstärkungssteg
- 501: Verbindung

- 701: Extrudieren
- 703: Biegen

## Patentansprüche

1. Mehrteiliger Federlenker (100) für eine Radaufhängung eines Fahrzeugs, mit:
einem ersten Profilseitenteil (101), das einen ersten Seitenschenkel des mehrteiligen Federlenkers (100) bildet, wobei das erste Profilseitenteil (101) eine erste Auswölbung (105) aufweist;
einem zweiten Profilseitenteil (103), das einen zweiten Seitenschenkel des mehrteiligen Federlenkers (100) bildet, wobei das zweite Profilseitenteil (103) eine zweite Auswölbung (107) aufweist;
wobei die erste Auswölbung (105) und die zweite Auswölbung (107) einander gegenüber angeordnet sind und einen Federaufnahmebereich (108) für die Aufnahme einer Feder bilden,
**dadurch gekennzeichnet, dass** das erste Profilseitenteil (101) und das zweite Profilseitenteil (103) einstückige Profilseitenteile sind, wobei das erste Profilseitenteil (101) und das zweite Profilseitenteil (103) stranggepresste Profilseitenteile sind.

2. Mehrteiliger Federlenker (100) nach Anspruch 1, wobei das erste Profilseitenteil (101) und das zweite Profilseitenteil (103) zumindest abschnittsweise voneinander beabstandet und einander gegenüber angeordnet sind.

3. Mehrteiliger Federlenker (100) nach einem der vorstehenden Ansprüche, wobei das erste Profilseitenteil (101) und das zweite Profilseitenteil (103) jeweils einen Z-förmigen, insbesondere einen gestreckt Z-förmigen, oder einen S-förmigen, insbesondere einen gestreckt S-förmigen, Querschnitt aufweisen.

4. Mehrteiliger Federlenker (100) nach einem der vorstehenden Ansprüche, wobei das erste Profilseitenteil (101) und das zweite Profilseitenteil (103) jeweils einen Außenflansch (109, 111) und einen Innenflansch (117, 119) aufweisen, wobei der Außenflansch (109, 111) und der Innenflansch (117, 119) des jeweiligen Profilseitenteils (101, 103) durch eine Wandung (113, 115) verbunden sind, wobei die Außenflansche (109, 111) der Profilseitenteile (101, 103) einander abgewandt nach außen gerichtet sind und wobei die Innenflansche (117, 119) der Profilseitenteile (101, 103) einander zugewandt nach innen gerichtet sind.

5. Mehrteiliger Federlenker (100) nach Anspruch 4, wobei die Profildicken der Außenflansche (109, 111) sich von den Profildicken der Innenflansche (117, 119) und/oder von den Profildicken der Wandungen (113, 115) unterscheiden

6. Mehrteiliger Federlenker (100) nach einem der vorstehenden Ansprüche, wobei das erste Profilseitenteil (101) und das zweite Profilseitenteil (103) jeweils einen Innenflansch (117, 119) aufweisen, wobei die Innenflansche (117, 119) der Profilseitenteile (101, 103) nach innen gerichtet und einander zugewandt sind, wobei im Federaufnahmebereich (108) auf den Innenflanschen (117, 119) ein Federauflageteil (121) zur Auflage der Feder angeordnet ist.

7. Mehrteiliger Federlenker (100) nach Anspruch 6, wobei das Federauflageteil (121) durch ein Formteil, insbesondere durch ein Leichtmetallpressteil, gebildet ist.

8. Mehrteiliger Federlenker (100) nach Anspruch 6 oder 7, wobei das Federauflageteil (121) mit dem jeweiligen Innenflansch (117, 119) mittels einer Kaltfügeverbindung, insbesondere einer Clinch-Verbindung und/oder einer Stanznietverbindung und/oder einer Klebeverbindung, oder mittels einer Warmfügeverbindung, insbesondere einer Reibrührschweißverbindung, verbunden ist.

9. Mehrteiliger Federlenker (100) nach einem der vorstehenden Ansprüche, wobei das erste Profilseitenteil (101) und das zweite Profilseitenteil (103) jeweils einen Außenflansch (109, 111) aufweisen, wobei die Außenflansche (109, 111) nach außen gerichtet und einander abgewandt sind, wobei auf den Außenflanschen (109, 111) ein Verstärkungssteg (128, 201) angeordnet ist, welcher das erste Profilseitenteil (101) und das zweite Profilseitenteil (103) verbindet.

10. Mehrteiliger Federlenker (100) nach Anspruch 9, wobei der Verstärkungssteg (128, 201) mit dem jeweiligen Außenflansch (109, 111) mittels einer Kaltfügeverbindung, insbesondere einer Clinch-Verbindung und/oder einer Stanznietverbindung und/oder Klebeverbindung, oder mittels einer Warmfügeverbindung, insbesondere einer Reibrührschweißverbindung, verbunden ist.

11. Mehrteiliger Federlenker (100) nach einem der vorstehenden Ansprüche, wobei ein Verstärkungssteg (401) vorgesehen ist, welcher eine Wandung (113) des ersten Profilseitenteils (101) und eine Wandung (115) des zweiten Profilseitenteils (103) durchsetzt und das erste Profilseitenteil (101) und das zweite Profilseitenteil (103) verbindet.

12. Mehrteiliger Federlenker (100) nach Anspruch 9, 10 oder 11, wobei der jeweilige Verstärkungssteg (128, 201, 401) radaufhängungsseitig, unmittelbar vor oder nach dem Federaufnahmebereich (108) oder fahrzeugaufbauseitig angeordnet ist.

13. Mehrteiliger Federlenker (100) nach einem der vorstehenden Ansprüche, wobei der mehrteilige Federlenker (100) ein erstes Lagerende (133) zur radseitigen Lagerung und ein zweites Lagerende (137) zur fahrzeugaufbauseitigen Lagerung aufweist, wobei das erste Profilseitenteil (101) und das zweite Profilseitenteil (103) an dem ersten Lagerende (133) fluchtend gegenüberliegende Lageröffnungen (135), insbesondere Stanzlöcher, zur Dämpfer-Anbindung aufweisen, und/oder wobei in dem ersten Profilseitenteil (101) und in dem zweiten Profilseitenteil (103) an dem zweiten Lagerende (137) fluchtend gegenüberliegende Lageröffnungen (139) zur gemeinsamen Aufnahme eines Elastomerlagers gebildet sind.

14. Verfahren zum Herstellen eines mehrteiligen Federlenkers, mit:
Extrudieren (701) von zwei Leichtmetallstrangprofilen;
Biegen (703), insbesondere Pressbiegen, der Leichtmetallstrangprofile in einem mittleren Bereich der Leichtmetallstrangprofile, um jeweils ein Profilseitenteil mit einer Auswölbung zu erhalten, wobei gegenüber liegende Auswölbungen von Profilseitenteilen einen Federaufnahmebereich für die Aufnahme einer Feder bilden,
wobei das erste Profilseitenteil (101) und das zweite Profilseitenteil (103) einstückige Profilseitenteile sind, wobei das erste Profilseitenteil (101) und das zweite Profilseitenteil (103) stranggepresste Profilseitenteile sind.

## Claims

1. Multiple-piece spring link (100) for a wheel suspension system of a vehicle, having:
a first profiled side part (100) which forms a first side limb of the multiple-piece spring link (100), the first profiled side part (101) having a first protuberance (105) ;
a second profiled side part (103) which forms a second side limb of the multiple-piece spring link (100), the second profiled side part (103) having a second protuberance (107);
the first protuberance (105) and the second protuberance (107) being arranged opposite one another and forming a spring receiving region (108) for receiving a spring,
**characterized in that** the first profiled side part (101) and the second profiled side part (103) are single-piece profiled side parts, the first profiled side part (101) and the second profiled side part (103) being extruded profiled side parts.

2. Multiple-piece spring link (100) according to Claim 1, the first profiled side part (101) and the second profiled side part (103) being spaced apart from one another at least in sections and being arranged opposite one another.

3. Multiple-piece spring link (100) according to either of the preceding claims, the first profiled side part (101) and the second profiled side part (103) in each case having a Z-shaped cross section, in particular a stretched Z-shaped cross section, or an S-shaped cross section, in particular a stretched S-shaped cross section.

4. Multiple-piece spring link (100) according to one of the preceding claims, the first profiled side part (101) and the second profiled side part (103) in each case having an outer flange (109, 111) and an inner flange (117, 119), the outer flange (109, 111) and the inner flange (117, 119) of the respective profiled side part (101, 103) being connected by way of a wall (113, 115), the outer flanges (109, 111) of the profiled side parts (101, 103) being directed outwards in a manner which faces away from one another, and the inner flanges (117, 119) of the profiled side parts (101, 103) being directed inwards in a manner which faces one another.

5. Multiple-piece spring link (100) according to Claim 4, the profile thicknesses of the outer flanges (109, 111) differing from the profile thicknesses of the inner flanges (117, 119) and/or from the profile thicknesses of the walls (113, 115).

6. Multiple-piece spring link (100) according to one of the preceding claims, the first profiled side part (101) and the second profiled side part (103) in each case having an inner flange (117, 119), the inner flanges (117, 119) of the profiled side parts (101, 103) being directed inwards and facing one another, a spring support part (121) for supporting the spring being arranged on the inner flanges (117, 119) in the spring receiving region (108).

7. Multiple-piece spring link (100) according to Claim 6, the spring support part (121) being formed by way of a shaped part, in particular by way of a pressed light metal part.

8. Multiple-piece spring link (100) according to Claim 6 or 7, the spring support part (121) being connected to the respective inner flange (117, 119) by means of a cold joining connection, in particular a clinched connection and/or a self-piercing riveted connection and/or an adhesive connection, or by means of a warm joining connection, in particular by means of a friction stir welded connection.

9. Multiple-piece spring link (100) according to one of the preceding claims, the first profiled side part (101) and the second profiled side part (103) in each case having an outer flange (109, 111), the outer flanges (109, 111) being directed outwards and facing away from one another, a reinforcing web (128, 201) being arranged on the outer flanges (109, 111), which reinforcing web (128, 201) connects the first profiled side part (101) and the second profiled side part (103).

10. Multiple-piece spring link (100) according to Claim 9, the reinforcing web (128, 201) being connected to the respective outer flange (109, 111) by means of a cold joining connection, in particular a clinched connection and/or a self-piercing riveted connection and/or an adhesive connection, or by means of a warm joining connection, in particular by means of a friction stir welded connection.

11. Multiple-piece spring link (100) according to one of the preceding claims, a reinforcing web (401) being provided which penetrates a wall (113) of the first profiled side part (101) and a wall (115) of the second profiled side part (103) and connects the first profiled side part (101) and the second profiled side part (103).

12. Multiple-piece spring link (100) according to Claim 9, 10 or 11, the respective reinforcing web (128, 201, 401) being arranged on the wheel suspension system side, directly in front of or behind the spring receiving region (108), or on the vehicle body side.

13. Multiple-piece spring link (100) according to one of the preceding claims, the multiple-piece spring link (100) having a first bearing end (133) for wheel-side mounting and a second bearing end (137) for vehicle body-side mounting, the first profiled side part (101) and the second profiled side part (103) having bearing openings (135), in particular punched holes, which lie opposite one another in an aligned manner at the first bearing end (133) for attaching the damper, and/or bearing openings (139) which lie opposite one another in an aligned manner at the second bearing end (137) being formed in the first profiled side part (101) and in the second profiled side part (103) for joint receiving of an elastomeric bearing.

14. Method for producing a multiple-piece spring link, comprising:
extruding (701) of two extruded light metal profiles;
bending (703), in particular press bending, of the extruded light metal profiles in a middle region of the extruded light metal profiles, in order in each case to obtain a profiled side part with a protuberance, protuberances which lie opposite one another of profiled side parts forming a spring receiving region for receiving a spring,
the first profiled side part (101) and the second profiled side part (103) being single-piece profiled side parts, the first profiled side part (101) and the second profiled side part (103) being extruded profiled side parts.

## Revendications

1. Bras de ressort en plusieurs parties (100) pour une suspension de roue d'un véhicule, comprenant :
une première partie latérale profilée (101), qui forme une première branche latérale du bras de ressort en plusieurs parties (100), la première partie latérale profilée (101) présentant une première courbure (105) ;
une deuxième partie latérale profilée (103), qui forme une deuxième branche latérale du bras de ressort en plusieurs parties (100), la deuxième partie latérale profilée (103) présentant une deuxième courbure (107) ;
la première courbure (105) et la deuxième courbure (107) étant disposées en face l'une de l'autre et formant une région de réception de ressort (108) pour recevoir un ressort,
**caractérisé en ce que**
la première partie latérale profilée (101) et la deuxième partie latérale profilée (103) sont des parties latérales profilées d'une seule pièce, la première partie latérale profilée (101) et la deuxième partie latérale profilée (103) étant des parties latérales profilées extrudées.

2. Bras de ressort en plusieurs parties (100) selon la revendication 1, dans lequel la première partie latérale profilée (101) et la deuxième partie latérale profilée (103) sont espacées au moins en partie l'une de l'autre et sont disposées en face l'une de l'autre.

3. Bras de ressort en plusieurs parties (100) selon l'une quelconque des revendications précédentes, dans lequel la première partie latérale profilée (101) et la deuxième partie latérale profilée (103) présentent à chaque fois une section transversale en forme de Z, en particulier une section transversale en forme de Z étiré, ou en forme de S, en particulier en forme de S étiré.

4. Bras de ressort en plusieurs parties (100) selon l'une quelconque des revendications précédentes, dans lequel la première partie latérale profilée (101) et la deuxième partie latérale profilée (103) présentent à chaque fois une bride extérieure (109, 111) et une bride intérieure (117, 119), la bride extérieure (109, 111) et la bride intérieure (117, 119) de la partie latérale profilée respective (101, 103) étant connectées par une paroi (113, 115), les brides extérieures (109, 111) des parties latérales profilées (101, 103) étant orientées à l'écart l'une de l'autre vers l'extérieur et les brides intérieures (117, 119) des parties latérales profilées (101, 103) étant orientées l'une vers l'autre vers l'intérieur.

5. Bras de ressort en plusieurs parties (100) selon la revendication 4, dans lequel les épaisseurs de profilé des brides extérieures (109, 111) se distinguent des épaisseurs de profilé des brides intérieures (117, 119) et/ou des épaisseurs de profilé des parois (113, 115).

6. Bras de ressort en plusieurs parties (100) selon l'une quelconque des revendications précédentes, dans lequel la première partie latérale profilée (101) et la deuxième partie latérale profilée (103) présentent chacune une bride intérieure (117, 119), les brides intérieures (117, 119) des parties latérales profilées (101, 103) étant orientées vers l'intérieur et étant tournées l'une vers l'autre, une partie de support de ressort (121) pour supporter le ressort étant disposée dans la région de réception de ressort (108) sur les brides intérieures (117, 119).

7. Bras de ressort en plusieurs parties (100) selon la revendication 6, dans lequel la partie de support de ressort (121) est formée par une pièce façonnée, en particulier par une pièce pressée en métal léger.

8. Bras de ressort en plusieurs parties (100) selon la revendication 6 ou 7, dans lequel la partie de support de ressort (121) est connectée à la bride intérieure respective (117, 119) au moyen d'un assemblage par jonction à froid, en particulier d'un assemblage par clinchage et/ou d'un assemblage par rivetage-poinçonnage et/ou d'un assemblage par collage, ou au moyen d'un assemblage par jonction à chaud, en particulier d'un assemblage par soudage par friction.

9. Bras de ressort en plusieurs parties (100) selon l'une quelconque des revendications précédentes, dans lequel la première partie latérale profilée (101) et la deuxième partie latérale profilée (103) présentent à chaque fois une bride extérieure (109, 111), les brides extérieures (109, 111) étant orientées vers l'extérieur et étant détournées l'une de l'autre, une nervure de renforcement (128, 201) étant disposée sur les brides extérieures (109, 111), laquelle relie la première partie latérale profilée (101) et la deuxième partie latérale profilée (103).

10. Bras de ressort en plusieurs parties (100) selon la revendication 9, dans lequel la nervure de renforcement (128, 201) est connectée à la bride extérieure respective (109, 111) au moyen d'un assemblage par jonction à froid, en particulier d'un assemblage par clinchage et/ou d'un assemblage par rivetage-estampage et/ou d'un assemblage par collage, ou au moyen d'un assemblage par jonction à chaud, en particulier d'un assemblage par soudage par friction.

11. Bras de ressort en plusieurs parties (100) selon l'une quelconque des revendications précédentes, dans lequel une nervure de renforcement (401) est prévue, laquelle traverse une paroi (113) de la première partie latérale profilée (101) et une paroi (115) de la deuxième partie latérale profilée (103) et relie la première partie latérale profilée (101) et la deuxième partie latérale profilée (103).

12. Bras de ressort en plusieurs parties (100) selon la revendication 9, 10 ou 11, dans lequel la nervure de renforcement respective (128, 201, 401) est disposée du côté de la suspension de roue, directement avant ou après la région de réception de ressort (108), ou du côté de la caisse de véhicule.

13. Bras de ressort en plusieurs parties (100) selon l'une quelconque des revendications précédentes, dans lequel le bras de ressort en plusieurs parties (100) présente une première extrémité de palier (133) pour le support sur palier du côté de la roue et une deuxième extrémité de palier (137) pour le support sur palier du côté de la caisse de véhicule, la première partie latérale profilée (101) et la deuxième partie latérale profilée (103) présentant des ouvertures de palier (135) opposées en affleurement au niveau de la première extrémité de palier (133), en particulier des trous d'estampage, pour le raccordement à un amortisseur, et/ou dans lequel, des ouvertures de palier (139) opposées en affleurement au niveau de la deuxième extrémité de palier (137) sont formées dans la première partie latérale profilée (101) et dans la deuxième partie latérale profilée (103) pour recevoir en commun un palier élastomère.

14. Procédé de fabrication d'un bras de ressort en plusieurs parties, comprenant les étapes consistant à :
extruder (701) deux profilés filés en métal léger ;
cintrer (703), en particulier cintrer par pressage, les profilés filés en métal léger dans une région centrale des profilés filés en métal léger, afin d'obtenir à chaque foisune partie latérale profilée avec une courbure, des courbures opposées de parties latérales profilées formant une région de réception de ressort pour recevoir un ressort,
la première partie latérale profilée (101) et la deuxième partie latérale profilée (103) étant des parties latérales profilées d'une seule pièce, la première partie latérale profilée (101) et la deuxième partie latérale profilée (103) étant des parties latérales profilées extrudées.
